**Europäisches Patentamt**

**European Patent Office**

**Office européen des brevets**

(19)

(11) Veröffentlichungsnummer: **0 123 120 B1**

(12) **EUROPÄISCHE PATENTSCHRIFT**

(45) Veröffentlichungstag der Patentschrift:
**11.05.88**

(51) Int. Cl.⁴: **C 03 B 27/04**

(21) Anmeldenummer: **84102954.9**

(22) Anmeldetag: **16.03.84**

(54) **Düsenrippe für ein Düsensystem zur Beblasung von gewölbten Flächengebilden.**

(30) Priorität: **22.03.83 DE 3310356**

(43) Veröffentlichungstag der Anmeldung:
**31.10.84 Patentblatt 84/44**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**FR - A - 2 521 122**
**US - A - 4 314 836**

(73) Patentinhaber: **Glasstech, Inc., 995 Fourth Street Ampoint Industrial Park, Perrysburg Ohio 43551 (US)**

(72) Erfinder: **Dicks, Karl-Heinz, Lammersdorf, D-5107 Simmerath (DE)**
Erfinder: **Kramer, Carl, Am Chorusberg 8, D-5100 Aachen (DE)**

(74) Vertreter: **Dipl.-Ing. Schwabe, Dr. Dr. Sandmair, Dr. Marx, Stuntzstrasse 16, D-8000 München 80 (DE)**

## Beschreibung

Die Erfindung betrifft eine Düsenrippe für ein Düsensystem zur Beblasung von gewölbten Flächengebilden, insbesondere von gewölbten Glasscheiben gemäss dem Oberbegriff des Anspruchs 1.

Solche Düsensysteme werden insbesondere bei Blaseinrichtungen von Vorspannanlagen für gewölbte Glasscheiben verwendet. Da hierbei Glasscheiben mit unterschiedlichen Wölbungen und damit unterschiedlichen Krümmungsradien verarbeitet werden müssen, lassen sich durch Verwendung eines auf einfache Weise verstellbaren Düsensystems erhebliche Einsparungen durch Reduzierung von Umrüstzeiten erreichen.

Zu diesem Zweck ist bereits eine Düsenrippe der angegebenen Gattung vorgeschlagen worden, die mehrere, schwenkbar gelagerte, kastenförmige Düsenelemente und Düsenöffnungen in den Düsenelementen aufweist. Die kastenförmigen Düsenelemente sind durch Drehgelenke miteinander verbunden. Die Länge der einzelnen Düsenelemente muss jedoch unter Berücksichtigung der konstruktiven Möglichkeiten so gross gewählt werden, dass nur eine sehr grobe Annäherung an die gewölbte Form der Glasscheiben durch einen Polygonzug möglich ist. Dieses Düsensystem lässt sich also dann nicht verwenden, wenn geringe und vor allem über die Oberfläche nur wenig veränderliche Abstände der Düsenrippen von der zu beblasenden Oberfläche erforderlich sind. Ein weiterer Nachteil liegt darin, dass jedes kastenförmige Düsenelement einzeln mit der Blasluft versorgt werden muss, wodurch es, über die Länge der Düsenrippe gesehen, zu starken Schwankungen in der zugeführten Luftmenge kommen kann (DE-B-2 232 209).

Der Erfindung liegt deshalb die Aufgabe zugrunde, eine Düsenrippe der angegebenen Gattung zu schaffen, bei der die oben erwähnten Nachteile nicht auftreten.

Insbesondere soll eine Düsenrippe vorgeschlagen werden, die eine sehr exakte Anpassung an die gewölbte Form des Flächengebildes ermöglicht.

Dies wird erfindungsgemäss durch die im kennzeichnenden Teil des Anspruchs 1 angegebenen Merkmale erreicht.

Zweckmässige Ausführungsformen sind in den Unteransprüchen zusammengestellt.

Die mit der Erfindung erzielten Vorteile beruhen insbesondere darauf, dass die Düsenrippe aus einzelnen, sehr kurzen, einander schuppenartig überlappenden Düsenelementen besteht, die im wesentlichen U-Form haben. Diese U-förmigen Düsenelemente sind im Bereich des Düsenscheitels auf einem verformbaren Träger montiert, der beispielsweise durch Federstahl-Rundstäbe gebildet wird. Durch Verformung dieses Trägers können die einzelnen, schuppenartig übereinander liegenden Düsenelemente auf die gewünschte Form gebracht werden, wobei sich die freien, vom Träger abgewandten Enden der Düsenelemente entsprechend der eingestellten Krümmung frei bewegen.

Damit lassen sich auch Düsenrippen-Formen realisieren, die sehr exakt stark unterschiedlichen Formen des zu behandelnden Flächengebildes angepasst sind. Auch geringe, über die Oberfläche nur wenig veränderliche Abstände der Düsenrippen von der zu beblasenden Oberfläche des Flächengebildes können exakt eingehalten werden.

Ein weiterer Vorteil liegt darin, dass alle Düsenöffnungen jeder Düsenrippe aus einem gemeinsamen, nicht unterteilten Raum mit der Blasluft versorgt werden können. Damit ist eine sehr gleichmässige Blasluft-Zufuhr über die gesamte Länge jeder Düsenrippe gewährleistet.

Die Blasluft wird durch den Innenraum der einzelnen U-förmigen Düsenelemente zugeführt, wobei die Gefahr besteht, dass Blasluft nach aussen durch die Spalte zwischen benachbarten Düsenelementen entweicht. Um diese Blasluftverluste zu verhindern, werden die Seitenwände der U-förmigen Düsenelemente in Dichttaschen geführt, nämlich zwei parallel zueinander verlaufenden Wänden, deren Abstände voneinander etwas grösser als die Dicke zwei übereinanderliegenden Seitenwände von zwei benachbarten Düsenelementen sind; dadurch entsteht eine Art Labyrinthdichtung, die in vielen Anwendungsfällen bereits zur Abdichtung ausreicht.

Bei Bedarf kann zusätzlich noch eine weitere Dichtung vorgesehen werden, wobei der im Innern der Düsenrippe herrschende Überdruck ausgenutzt wird, um beispielsweise die Seitenwände der Düsenrippe gegen eine entsprechende Dichtungsfläche zu drücken oder um eine innen aufgebrachte Dichtung gegen die Seitenwände der Düsenrippe zu pressen. Für die Verformung des Trägers stehen verschiedene Verfahren zur Verfügung, und zwar können die freien Endbereiche des Trägers, ähnlich wie bei einer Rohrbiegemaschine, verformt werden. Als Alternative hierzu ist es auch möglich, die als Träger dienenden Rundstäbe biegesteif mit den Endstücken jeder Düsenrippe zu verbinden und diese Endstücke über eine Schwenkvorrichtung zu verstellen.

Die Endstücke der Düsenrippe sind in einer als Führung ausgebildeten Dichttasche mit einer Form geführt, die der gewünschten Verstellung angepasst ist.

Die Erfindung wird im folgenden anhand von Ausführungsbeispielen unter Bezugnahme auf die beiliegenden, schematischen Zeichnungen näher erläutert. Es zeigen

Fig. 1 einen Längsschnitt durch zwei einander gegenüberliegende Düsenrippen,

Fig. 2 einen Schnitt längs der Linie A-B durch eine Düsenrippe nach Fig. 1,

Fig. 3 eine perspektivische Ansicht eines einzelnen Düsenelementes,

Fig. 4 eine ähnliche Ansicht wie Fig. 2, jedoch mit einer anderen Ausführungsform der Dichtung, und

Fig. 5 eine Ansicht einer Ausführungsform des Biegemechansimus.

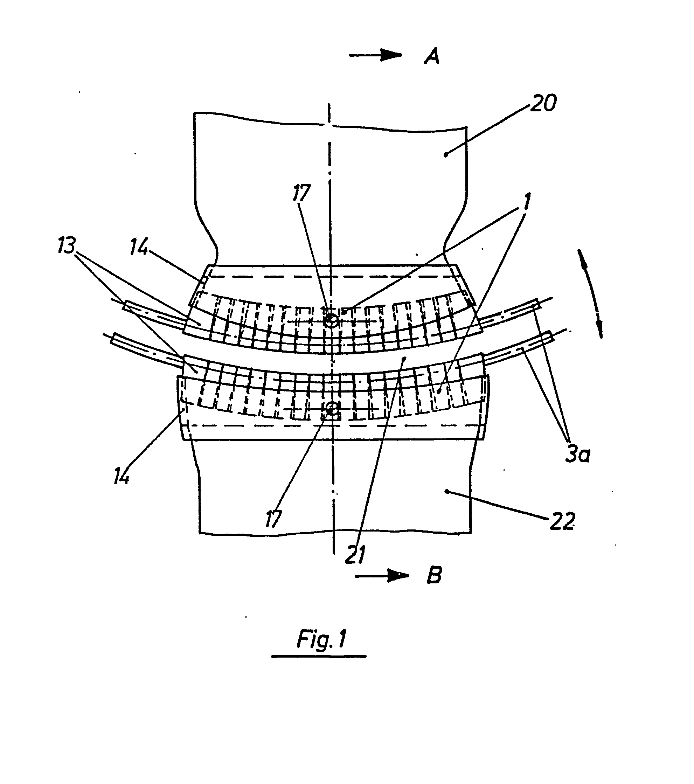

Figur 1 zeigt einen Längsschnitt durch zwei einander gegenüberliegende Düsenrippen 20 bzw. 22, zwischen denen ein gewölbter, der Form einer nicht dargestellten Glasscheibe angepasster Spalt 21 ausgebildet ist. Diese Glasscheibe wird also senkrecht zur Zeichenebene durch den Spalt 21 transportiert.

Den Düsenrippen 20 und 22 wird die Blasluft durch nicht dargestellte Blasluftquellen von oben bzw. unten zugeführt.

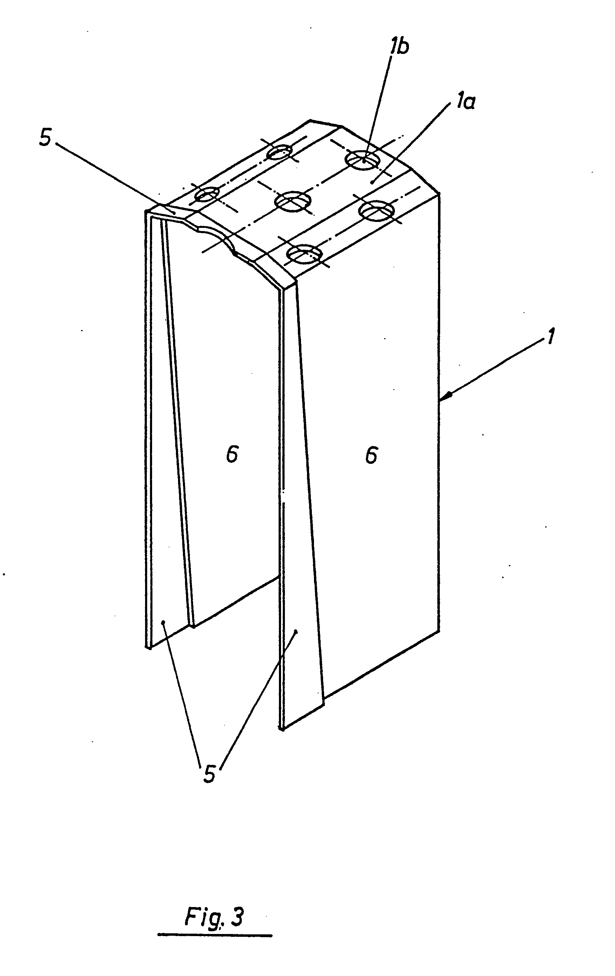

Jede Düsenrippe 20 bzw. 22 besteht aus mehreren, im wesentlichen U-förmigen Düsenelementen 1, wie man in Figur 3 erkennt; diese Düsenelemente 1 haben einen etwa walmdachähnlichen Querschnitt mit dem Düsenscheitel 1a und den beiden nahezu parallel zueinander verlaufenden Seitenwänden 6. Im Düsenscheitel 1a befinden sich die Düsenöffnungen 1b. Bei der dargestellten Ausführungsform sind drei zueinander parallele Reihen von Düsenöffnungen 1 b vorgesehen.

Ein Randbereich der Seitenwände 6 der Düsenelemente 1 ist mit einer Falzung 5 versehen, wobei die Breite der Falzung 5, vom Düsenscheitel 1a aus beginnend, der erforderlichen Winkelverstellung der einzelnen Düsenelemente 1 angepasst wird. Eine typische Form der Falzung 5 zeigt Figur 3, wobei sich diese Form in Abhängigkeit von der Lage des Düsenelementes 1 in der Düsenrippe ändern kann.

Die Falzung 5 wird entweder nach innen oder nach aussen gelegt, so dass die Seitenflächen 6 der Düsenelemente 1 entweder innen oder aussen glatt sind; bei der in Fig. 3 dargestellten Ausführungsform ragt die Falzung 5 nach aussen vor, so dass an der Innenfläche der Seitenwände 6 keine Vorsprünge auftreten.

Die einzelnen, U-förmigen Düsenelemente 1 werden schuppenartig übereinandergeschoben, wobei die Seitenwände 6 von benachbarten Düsenelementen 1 aneinanderliegen und eine seitliche Verschiebung durch die jeweilige Falzung 5 verhindert wird, die sich über den gesamten Kantenbereich jedes Düsenelementes 1, also auch über den Düsenscheitel 1a, erstreckt.

Die U-förmigen Düsenelemente 1 sind auf zwei symmetrisch zur mittleren Reihe der Düsenöffnungen 1b angeordneten Rundstäben 3 aus Federstahl durch Klemmbügel 5 gehalten, die an den Innenflächen des Düsenscheitels 1a angebracht sind.

Diese Rundstäbe 3 liegen also an den Innenflächen der Düsenscheitel 1 an und ragen gemäss der Darstellung in Figur 1 links und rechts über die seitlichen Enden der Düsenrippen 20 bzw. 22 hinaus, so dass die Enden 3a der Rundstäbe 3 frei nach aussen vorstehen.

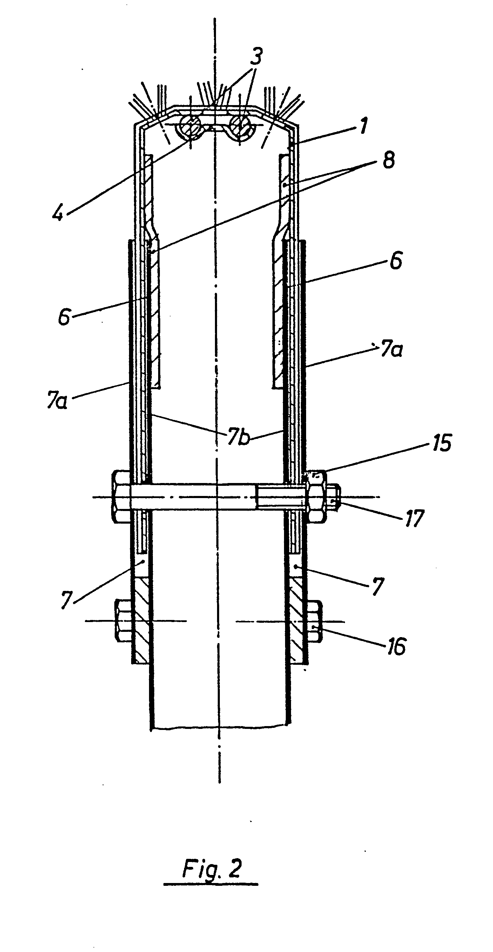

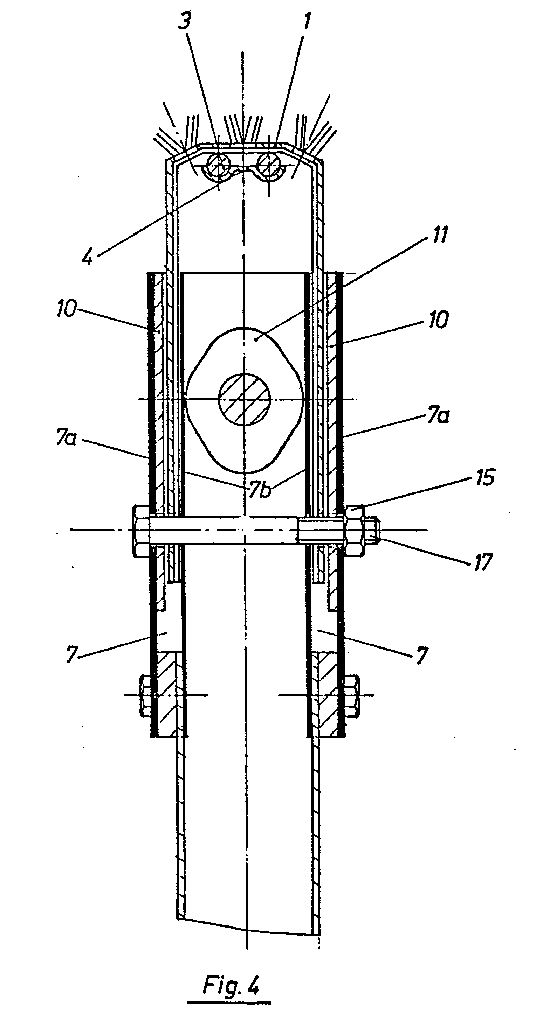

Die Seitenflächen 6 aller U-förmigen Düsenelemente 1 einer Düsenrippe 20 bzw. 22 befinden sich in Dichttaschen 7, die durch zwei parallel zueinander angeordnete Wände 7a und 7b (s. Fig. 2 + 4) gebildet werden; der Abstand der Wände 7a und 7b voneinander ist etwas grösser als die Dicke von zwei übereinanderliegenden Seitenwänden 6 von zwei benachbarten Düsenelementen 1. Diese Dichttaschen 7 dienen auch zur Führung der Seitenwände 6 und damit der Düsenelemente 1 bei der noch zu erläuternden Verformung der Rundstäbe 3.

Das mittlere Düsenelement 1, also gemäss der Darstellung in Fig. 12 das Düsenelement 1, das sich auf der Linie A-B befindet, wird durch die aus Fig. 2 erkennbare Verbindung aus Schraube 15 und Gewindebolzen 17 an einem nicht näher dargestellten, stationären Teil befestigt. Der Gewindebolzen 17 erstreckt sich durch die Wände 7a, 7b der Dichttaschen sowie das mittlere Düsenelement 1.

Ein weiterer Gewindebolzen 16 dient zur Befestigung der Dichttaschen 7.

Die Dichttaschen 7 bilden in Verbindung mit den Seitenwänden 6 der Düsenelemente 1 eine Art Labyrinthdichtung, die in vielen Fällen bereits zur Abdichtung der Innenraums der Düsenrippen 20, 22 ausreicht.

Fig. 2 zeigt eine zusätzliche Dichtung; dabei liegt die glatte Fläche, also die Fläche ohne Vorsprünge, auf der Innenseite der Düsenelemente 1, wie es in Fig. 3 dargestellt ist; auf die Innenseite der Innenwände 7b der Dichtungstaschen 7 ist eine Schicht 8 aus einem flexiblen, elastischen Material, insbesondere Gummi, aufgeklebt; gemäss der Darstellung in Fig. 2 ragt diese Schicht 8 über den oberen Rand der Dichttasche 7 hinaus und liegt dort an den Innenflächen der Seitenwände 6 der Düsenelemente 1 an.

Durch den Druck des Kühlmediums im Innern der Düsenrippen 20, 22 wird die Schicht 8 an die glatten Innenflächen der Seitenwände 6 der Düsenelemente 1 angedrückt, wodurch sich über die gesamte Höhe der Düsenelemente und damit der Düsenrippen eine ausreichende Abdichtung ergibt. Als Alternative hierzu ist es auch möglich, die Aussenflächen der Seitenwände 6 der Düsenelemente 1 glatt auszugestalten, d.h., anders als bei der Ausführungsform nach Fig. 3 die Falzung 5 nach innen zu verlegen; hierbei kann eine Schicht 10 aus flexiblem, elastischem Material, insbesondere Gummi, auf die Innenflächen der Aussenwände 7a der Dichttaschen 7 geklebt werden, so dass die Seitenwände 6 der Düsenelemente 1 durch den Überdruck im Innern der Düsenrippen gegen diese Schichten gedrückt werden.

Bei dieser, in Fig. 4 dargestellten Ausführungsform kann der Dichtvorgang auch dadurch unterstützt werden, dass die in die Dichttaschen 7 eingeführten Seitenwände 6 durch eine zusätzliche Exzenter-Spannvorrichtung 11 mit Hilfe der Innenwände 7b der Dichttaschen 7 gegen die Schicht 10 gepresst werden. Eine solche Exzenter-Spannvorrichtung 11 hat eine relativ kleine Fläche, so dass sie den Zuströmquerschnitt der Düsenrippen 20, 22 nur wenig beeinflusst.

Um die aus Fig. 1 erkennbare, gewölbte Form der einander zugewandten Flächen der Düsenrippen 20 und 22 zu verändern, wird ein Biegemoment in die seitlich die Düsenrippen 20, 22 überragenden Endbereiche 3a der Rundstäbe 3 eingeleitet. Die Einleitung dieses Biegemomentes kann beispielsweise über Rollen auf einem Schwenkhebel erfolgen, wie es bei Rohrbiegemaschinen verwendet wird.

Eine weitere Möglichkeit besteht darin, die Rundstäbe 3 mit den Endstücken 13 der Düsenrippen 20, 22 biegesteif zu verbinden; durch entsprechende Verstellung dieser Endstücke mit einem geeigneten Schenkmechanismus werden auch die Rundstäbe 3 verformt, wodurch die angestrebte Form erhalten wird.

Eine weitere, in Fig. 1 dargestellte Variante besteht schliesslich darin, die Endstücke 13 in stabilen Dichttaschen 14 auf Führungsflächen mit einer Form zu verstellen, die der gewünschten Verstellung der Rundstäbe 3 angepasst ist. Dabei kann jede Düsenrippe 20, 22 in der Mitte oder an einer geeigneten, anderen Stelle gegen eine vertikale Verschiebung fixiert werden. Bei Bedarf kann diese Fixierung auch verstellbar ausgeführt werden.

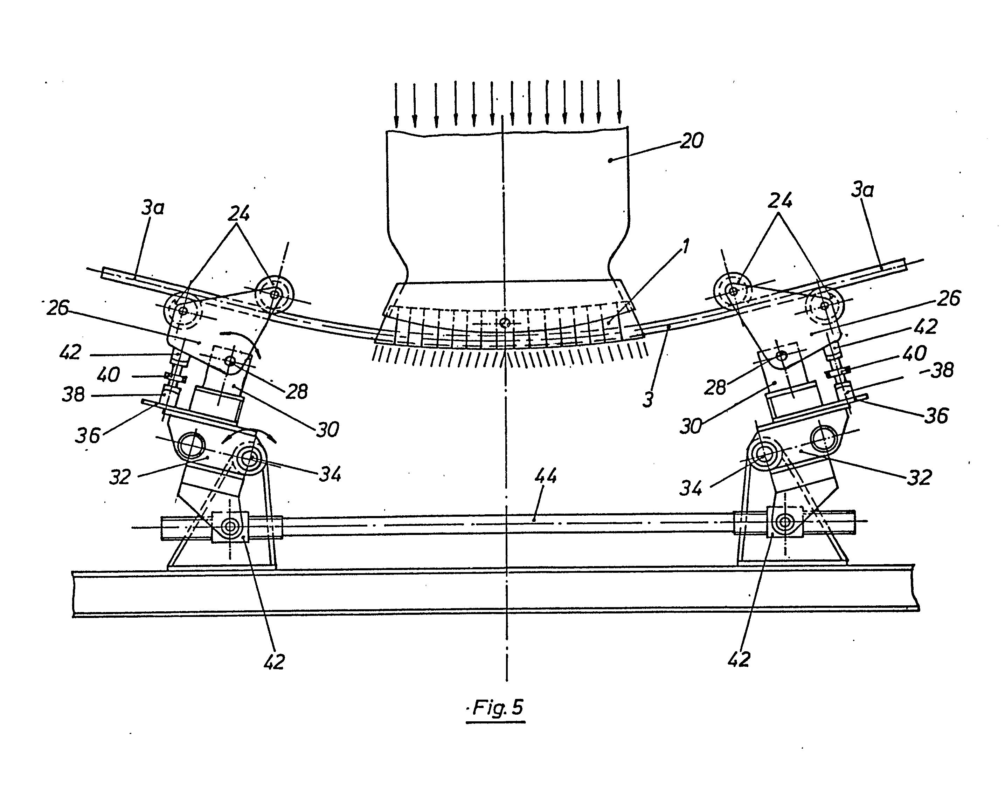

Fig. 5 zeigt eine Ausführungsform eines Biegemechanismus für die Rundstäbe 3. Dabei wird eine Konstruktion verwendet, wie sie auch für Rohrbiegemaschinen eingesetzt wird.

Zu diesem Zweck ist das linke, seitliche Ende 3a des Rundstabes 3 beweglich zwischen zwei Rollen 24 geführt, die mit Nuten für die Aufnahme des Endes 3a versehen sind. Diese Rollen 24 dienen zum Längenausgleich in axialer Richtung der Rundstäbe 3 bei einer Änderung ihrer Form, die durch eine Schwenkbewegung der schwenkbaren Lagerböcke 26 der Rollen 24 um ihre Lagerpunkte 28 erreicht wird. Die Rollen 24 und die Lagerböcke 26 haben also etwa die Funktion, wie sie für Rohrbiegemaschinen bekannt ist. Die Lagerböcke 26 können einzeln um ihre Lagerpunkte 28 geschwenkt werden.

Die Lagerböcke 26 für mehrere, nebeneinander angeordnete Düsenrippen sind auf gemeinsamen Tragprofilen 32 mit Stützen 30 montiert, an denen sich die Lagerpunkte 28 befinden. Die Tragprofile 32 können gruppenweise durch eine Drehbewegung um ihre Lagerpunkte 34 sehr exakt gemeinsam verstellt werden.

Die Tragprofile 32 weisen eine Plattform 36 auf, die neben der Stütze 30 eine Gewindebuchse 38 trägt, in der eine Gewindespindel 40 aufgenommen wird; das obere Ende der Gewindespindel 40 sitzt in einer weiteren Gewindebuchse 42, die an dem Lagerbock 26 angebracht ist.

Durch eine manuelle oder motorische Drehung der Gewindespindel 40 im Uhrzeigersinn oder gegen den Uhrzeigersinn werden die beiden Gewindebuchsen 38 und 42 aufeinander zu oder voneinander wegbewegt, wodurch die Lagerböcke 26 um ihren Lagerpunkt 28 geschwenkt werden und damit eine entsprechende Wölbung der Rundstäbe 3 eingestellt wird.

Am unteren Ende der Tragprofile 32 sind Gewindebuchsen 42 befestigt, in denen eine weitere Gewindespindel 44 geführt wird. Durch eine Drehung dieser Gewindespindel 44 in Richtung des

Uhrzeigersinns bzw. gegen den Uhrzeigersinn werden die Gewindebuchsen 42 aufeinander zu bzw. voneinander wegbewegt und dadurch die Tragprofile 32 um ihre Lagerpunkte 34 geschwenkt.

Sind gemäss der Darstellung in den Figuren 2 und 4 zwei Rundstäbe 3 für jede Düsenrippe vorgesehen, so können bei dem Schwenkmechanismus nach Fig. 5 entweder entsprechend zwei Rollenpaare 4 verwendet werden, die jedoch auf gemeinsamen Lagerböcken 26 angebracht werden können, oder es wird nur eine einzige Rolle vorgesehen, die jedoch mit zwei parallelen Nuten für die Aufnahme der Enden der Rundstäbe 3 versehen ist.

**Patentansprüche**

1. Düsenrippe für ein Düsensystem zur Belastung von gewölbten Flächengebilden, insbesondere von gewölbten Glasscheiben.
a) mit mehreren, schwenkbar gelagerten Düsenelementen, und
b) mit Düsenöffnungen in den Düsenelementen, gekennzeichnet durch die folgenden Merkmale:
c) die Düsenelemente (1) haben im wesentlichen eine U-Form und überdecken sich schuppenartig teilweise;
d) im seitlichen Überdeckungsbereich sind die Düsenelemente (1) in Dichttaschen (7) geführt;
e) die Dichttaschen (7) werden jeweils durch zwei zueinander parallele Wände (7a bzw. 7b) gebildet, deren Abstände voneinander etwas grösser als die Dicke von zwei übereinanderliegenden Seitenwänden (6) von zwei benachbarten Düsenelementen (1) sind;
f) die inneren Wänden (7b) der Dichttaschen (7) bilden zusammen mit den Düsenelementen (1) eine mit Blasluft versorgte Luftkammer;
g) an den beiden Enden der Düsenrippe sind die Düsenelemente als biegesteife, halbkastenförmige Endstücke (13) ausgeführt,
h) die Stirnseiten der Düsenrippen bildende Flächen der Endstücke sind in stabilen Dichttaschen (14) geführt; und
i) die Düsenelemente (1) sind durch einen Träger (3) mit veränderlicher, der Wölbung des Flächengebildes anpassbarer Form gehalten.

2. Düsenrippe nach Anspruch 1, dadurch gekennzeichnet, dass die Seitenwände (6) der U-förmigen Düsenelemente (1) im Überdeckungsbereich wechselseitig entweder innen oder aussen mit einer Falzung (5) versehen sind.

3. Düsenrippe nach Anspruch 2, dadurch gekennzeichnet, dass die Falzung (5) im Randbereich jedes Düsenelementes (1) vorgesehen ist.

4. Düsenrippe nach einem der Ansprüche 1 bis 3, dadurch gekennzeichnet, dass das mittlere Düsenelement (1) durch einen Gewindebolzen (17) gehalten ist, der sich durch die Dichttaschen (7) erstreckt.

5. Düsenrippe nach einem der Ansprüche 1 bis 4, dadurch gekennzeichnet, dass die Form der Führungsflächen der stabilen Dichttaschen (14) einer Verstellung der Endstücke (13) angepasst ist, die einer Verformung der Träger (3) auf die gewünschte Form entspricht.

6. Düsenrippe nach einem der Ansprüche 1 bis 5, dadurch gekennzeichnet, dass die Träger (3) die Düsenrippe seitlich überragen, und dass auf die überragenden Enden (3a) der Träger (3) ein Biegemoment zur elastischen, gleichmässigen Verformung des gesamten Trägers (23) ausgeübt wird.

7. Düsenrippe nach Anspruch 6, dadurch gekennzeichnet, dass die frei vorstehenden Enden (3a) des Trägers (3) durch rollenartige, schwenkbare Auflager (24) nach Art einer Rohrbiegemaschine gehalten sind.

8. Düsenrippe nach einem der Ansprüche 1 bis 7, dadurch gekennzeichnet, dass der Träger durch mindestens einen elastischen Rundstab (3) gebildet wird, der an der Innenwand des Düsenscheitels (1a) anliegt.

9. Düsenrippe nach Anspruch 8, dadurch gekennzeichnet, dass symmetrisch zur mittleren Reihe der Düsenöffnungen (1b) zwei elastische Rundstäbe (3), insbesondere aus Federstahl, angeordnet sind.

10. Düsenrippe nach einem der Ansprüche 8 oder 9, dadurch gekennzeichnet, dass der Rundstab (3) bzw. die Rundstäbe (3) durch Klemmbügel (4) gehalten ist bzw. sind.

11. Düsenrippe nach einem der Ansprüche 1 bis 10, dadurch gekennzeichnet, dass an der Innenfläche der Innenwand (7b) der Dichttasche (7) ein flexibles Dichtungsmaterial (8) angebracht ist, dessen oberer Bereich an den Innenflächen der Düsenelemente (1) anliegt.

12. Düsenrippe nach einem der Ansprüche 1 bis 11, dadurch gekennzeichnet, dass an der Innenfläche der Aussenwand (7a) der Dichttasche (7) ein flexibles Dichtungsmaterial (10) angebracht ist.

13. Düsenrippe nach einem der Ansprüche 11 oder 12, dadurch gekennzeichnet, dass das flexible Dichtungsmaterial (8, 10) aus Gummi besteht.

14. Düsenrippe nach einem der Ansprüche 12 oder 13, dadurch gekennzeichnet, dass die Seitenwände (6) der Düsenelemente (1) durch eine Exzenter-Spannvorrichtung (11) gegen das Dichtungsmaterial (10) anpressbar sind.

## Claims

1. A blast head for a nozzle system for blowing onto curved sheet-like objects, particularly curved panes of glass,
a) having a plurality of pivotally mounted nozzle elements and
b) having nozzle openings in the nozzle elements, characterised by the following features:
c) the nozzle elements (1) have a substantially U-shape and partially overlap one another like scales;
d) in the lateral overlapping region, the nozzle elements (1) are guided in sealing pockets (7);
e) the sealing pockets (7) are each formed by two walls (7a and 7b) which are parallel to one another and the spacing apart of which ist somewhat greater than the thickness of two superimposed side walls (6) of two adjacent nozzle elements (1);
f) the inner walls (7b) of the sealing pockets (7) together with the nozzle elements (1) form an air chamber supplied with blow air;
g) at the two ends of the blast head, the nozzle elements are constructed in the form of semi-box-shaped end members (13) which are resistant to bending,
h) the faces of the end members forming the end faces of the blast heads are guided in stable sealing pockets (14); and
i) the nozzle elements (1) are held by a carrier (3) having a variable shape which can be adapted to the curvature of the sheet-like object.

2. A blast head according to Claim 1, characterised in that the side walls (6) of the U-shaped nozzle elements (1) are provided with a fold (5) alternately either inwards or outwards in the overlapping region.

3. A blast head according to Claim 2, characterised in that the fold (5) is provided in the marginal region of each nozzle element (1).

4. A blast head according to any one of the Claims 1 to 3, characterised in that the central nozzle element (1) is held by a threaded bolt (17) which extends through the sealing pockets (7).

5. A blast head according to any one of the Claims 1 to 4, characterised in that the shape of the guiding surfaces of the stable sealing pockets (14) is adapted to an adjustment of the end members (13) which corresponds to a deformation of the carrier (3) into the required shape.

6. A blast head according to any one of the Claims 1 to 5, characterised in that the carriers (3) project laterally beyond the blast head and that a bending moment is exerted on the projecting ends (3a) of the carriers (3) for the resilient, uniform deformation of the whole carrier (3).

7. A blast head according to Claim 6, characterised in that the freely projecting ends (3a) of the carrier (3) are held by roller-like, pivotable supports (24) in the manner of a tube bending machine.

8. A blast head according to any one of the Claims 1 to 7, characterised in that the carrier is formed by at least one resilient round bar (3) which bears against the inner wall of the nozzle top (1a).

9. A blast head according to Claim 8, characterised in that two resilient round bars (3), particularly of spring steel, are disposed symmetrically with respect to the middle row of nozzle openings (1b).

10. A blast head according to either one of the Claims 8 or 9, characterised in that the round bar (3) or the round bars (3) is or are held by clamp straps (4).

11. A blast head according to any one of the Claims 1 to 10, characterised in that disposed at the inner face of the inner wall (7b) of the sealing pocket (7) is a flexible sealing material (8), the upper region of which bears against the inner surfaces of the nozzle elements (1).

12. A blast head according to any one of the Claims 1 to 11, characterised in that a flexible sealing material (10) is fitted to the inner face of the outer wall (7a) of the sealing pocket (7).

13. A blast head according to either one of the Claims 11 or 12, characterised in that the flexible sealing material (8, 10) consists of rubber.

14. A blast head according to either one of the Claims 12 or 13, characterised in that the side walls (6) of the nozzle elements (1) can be pressed against the sealing material (10) by an eccentric clamping device (11).

**Revendications**

1. Porte-buses d'un système de buses pour le soufflage de surfaces de forme bombée, en particulier de plaques de verre bombées, comprenant
a) une pluralité d'éléments de buse orientable, et
b) des orifices de buses dans les éléments de buse,
caractérisée en ce que
c) les éléments de buse (1) présentent sensiblement une forme en U et s'imbriquent partiellement;
d) les éléments de buse (1) sont guideés, dans la zone de recouvrement latérale, dans des poches d'étanchéité (7);
e) les poches d'étanchéité (7) sont constituées à chaque fois par deux parois (7a, 7b) parallèles dont l'écartement relatif est légèrement plus grand que l'épaisseur de deux parois latérales (6) superposées de deux éléments de buse (1) voisins;
f) les parois intérieures (7b) des poches d'étanchéité (7) constituent, en combinaison avec les éléments de buse (1), une chambre d'air alimentée en air de soufflage;
g) les éléments de buse sont conformés, aux deux extrémités de la plaque de tête de buse, sous la forme d'extrémités (13) en semi-caisson rigides en flexion:
h) les surfaces des extrémités formant les faces frontales des plaques de têtes de buses sont quidées dans des poches d'étanchéité (14) solides; et que
i) les éléments de buse (1) sont maintenus par un support (3) de forme variable et adaptable à la courbures de la surface.

2. Porte-buses selon la revendication 1, caractérisé en ce que les parois latérales (6) des éléments de buse (1) en U présentent alternativement, dans la zone de recouvrement, un pliage (5) intérieur ou extérieur.

3. Porte-buses selon la revendication 2, caractérisé en ce que le pliage (5) est prévu dans la zone marginale de chaque élément de buse (1).

4. Porte-buses selon l'une quelconque des revendications 1 à 3, caractérisé en ce que l'élément de buse médian (1) est maintenu par un boulon fileté (17) qui s'étend au travers des poches d'étanchéité (7).

5. Porte-buses selon l'une quelconque des revendications 1 à 4, caractérisé en ce que la forme des surfaces de guidage des poches d'étanchéité solides (14) est adaptée à un déplacement des extrémités (13) lequel correspond à une déformation des supports (3) jusqu'à la forme désirée.

6. Porte-buses selon l'une quelconque des revendications 1 à 5, caractérisé en ce que les supports (3) dépassent latéralement du porte-buses, et que les extrémités (3a) en saillie du support (3) sont soumises à un moment de flexion pour la déformation élastique uniforme de l'ensemble du support (23).

7. Porte-buses selon la revendication 6, caractérisé en ce que les extrémités (3a) du support (3) qui dépassent librement sont maintenues par des appuis pivotants (24) en forme de rouleaux, à la manière d'une presse à cintrer des tubes.

8. Porte-buses selon l'une quelconque des revendications 1 à 7, caractérisé en ce que le support est constitué par au moins une barre ronde élastique (3) appliquée contre la face intérieure du sommet de buse (1a).

9. Porte-buses selon la revendication 8, caractérisé en ce que deux barres rondes élastiques (3), en particulier en acier à ressorts, sont disposées symétriquement par rapport à la rangée médiane des orifices de buse (1b).

10. Porte-buses selon l'une des revendications 8 ou 9, caractérisé en ce que la ou les barre(s) ronde(s) (3) est (sont) maintenue(s) par des étriers de serrage (4).

11. Porte-buses selon l'une quelconque des revendications 1 à 10, caractérisé en ce que la face intérieure (7b) de la poche d'étanchéité (7) est garnie d'un matériau d'étanchéité flexible (8) dont la partie supérieure est appliquée contre les surfaces intérieures des éléments de buse (1).

12. Porte-buses selon l'une quelconque des revendications 1 à 11, caractérisé en ce que la face intérieure de la paroi extérieure (7a) de la poche d'étanchéité (7) est garnie d'un matériau d'étanchéité flexible (10).

13. Porte-buses selon l'une des revendications 11 ou 12, caractérisé en ce que le matériau d'étanchéité flexible (8, 10) est du caoutchouc.

14. Porte-buses selon l'une des revendications 12 ou 13, caractérisé en ce que les parois latérales (6) des éléments de buse (1) peuvent être appliquées contre le matériau d'étanchéité (10) au moyen d'un dispositif de serrage à excentrique (11).

*Fig. 1*

*Fig. 2*

*Fig. 3*

Fig. 4

Fig. 5

0 123 120